# EUROPÄISCHE PATENTANMELDUNG

(11) **EP 1 516 761 A1**
(43) Veröffentlichungstag der Anmeldung: **23.03.2005**
(21) Anmeldenummer: 03021405.0
(22) Anmeldetag: 22.09.2003
(51) Int. Cl.: B60H 1/22, B60H 1/00, B60H 1/03

(54) **Elektrische Heizvorrichtung mit integriertem Temperatursensor**

(71) Anmelder: catem GmbH & Co.KG, 76863 Herxheim (DE)
(72) Erfinder: Uhl, Günter, Dr., 74921 Helmstadt-Bargen (DE)
(74) Vertreter: Grünecker, Kinkeldey, Stockmair & Schwanhäusser Anwaltssozietät

(57) **Zusammenfassung**

Die vorliegende Anmeldung betrifft eine elektrische Heizvorrichtung (100) mit PTC-Heizelementen, als Zusatzheizung für ein Kraftfahrzeug, und eine Steuerschaltung (130) für die elektrische Heizvorrichtung, die eine autarke Steuerung der Zusatzheizung ermöglicht. Die Heizleistungssteuerung erfolgt über einen in die Zusatzheizung integrierten Temperatursensor (170) und vorab in der Steuerschaltung gespeicherte Grenzwerte und ein über einen Stecker (180) zugeführtes Signal.

## Beschreibung

Die Erfindung betrifft eine elektrische Heizvorrichtung, insbesondere als Zusatzheizung für Kraftfahrzeuge.

Für den Einsatz in Kraftfahrzeugen, insbesondere Kraftfahrzeugen mit verbrauchsoptimierten Diesel- und zukünftig auch Benzinmotoren, in denen eine geringere Menge an Wärmeenergie anfällt, werden elektrische Zusatzheizungen zur Beheizung von Innenraum und Motor verwendet. Solche elektrischen Heizvorrichtungen sind jedoch auch für andere Einsatzzwecke geeignet, beispielsweise im Bereich von Hausinstallationen, insbesondere Raumklimatisierung, Industrieanlagen und dergleichen.

Das normale Heizsystem eines Kraftfahrzeugs ist an den Motorkühlkreislauf angeschlossen und nutzt die Motorabwärme zum Beheizen des Fahrzeuginnenraums. Zu diesem Zweck ist in der Heiz-/Klimaanlage des Kraftfahrzeugs ein Wasserwärmetauscher angeordnet. Der Wärmetauscher erwärmt die von außen angesaugte Luft über das normalerweise 80°C - 90°C warme Kühlwasser. Die erwärmte Luft wird anschließend dem Fahrzeuginnenraum zugeführt.

Bei niedrigen Außentemperaturen, beispielsweise 0°C, entspricht die Kühlwassertemperatur beim Starten des Motors der Außentemperatur. Eine Erwärmung des Fahrzeuginnenraums über das Kühlwasser damit nicht möglich, sondern erst nach einigen Minuten, sobald sich das Kühlwasser erwärmt hat und die Kühlwassertemperatur deutlich über der Außentemperatur liegt.

Durch die Verwendung von elektrischen Zusatzheizungen in der Heiz-/Klimaanlage eines Kraftfahrzeugs kann die Zeitdauer, in der die Abwärme des Motors noch nicht für Heizzwecke zur Verfügung steht, überbrückt werden. Elektrische Zusatzheizungen erreichen schon nach wenigen Sekunden ihre Betriebstemperatur und können somit die durchströmende Luft entsprechend aufheizen.

Für solche elektrischen Zusatzheizungen, die in Heiz-/Klimaanlagen von Kraftfahrzeugen eingesetzt werden, werden vorzugsweise PTC-Heizelemente verwendet, die elektrischen Strom in Wärme umsetzen. Die PTC-Heizelemente stehen mit Radiatorelementen in wärmeleitender Verbindung. Die von den PTC-Heizelementen erzeugte Wärme wird über die Radiatorelemente an die durchströmende Luft abgegeben.

Die Gesamtanordnung aus einem geschichteten Aufbau von PTC-Heizelementen, Radiatorelementen und Kontaktblechen, die der Stromzufuhr dienen, ist zur Erhöhung des Wirkungsgrads einem Klemmdruck ausgesetzt. Durch die Klemmung wird eine Verbesserung der elektrischen und thermische Kontaktierung der PTC-Heizelemente erreicht.

Die elektrischen Zusatzheizungen haben typischerweise eine Leistungsaufnahme im Bereich von 1.000 W bis 2.000 W. Mit dieser Leistungsaufnahme wird das Kraftfahrzeug-Bordnetz in erheblichem Umfang belastet. Um die Bordnetzbelastung so gering wie möglich zu halten, wird die Zusatzheizung abgeschaltet, sobald das Kühlwasser über den Wasserwärmetauscher ausreichend Heizleistung bereitstellt.

Ein mögliches Kriterium, das zur Abschaltung der elektrischen Zusatzheizung verwendet werden kann, ist die Kühlwassertemperatur. Wenn das Kühlwasser eine Temperatur von in etwa 80°C erreicht hat, steht ausreichend Heizleistung über das Kühlwasser bereit, so dass die elektrische Zusatzheizung abgeschaltet werden kann.

Anstelle des Kühlwassertemperaturkriteriums kann alternativ auch ein Zeitkriterium verwendet werden. Die elektrische Zusatzheizung wird nach dem Start des Motors abgeschaltet, sobald eine fest vorgegebene Zeitspanne seit dem Start des Motors verstrichen ist, beispielsweise fünf Minuten.

Zur Steuerung der Ein-/Ausschaltung der Zusatzheizung ist es erforderlich, dieser entsprechende Informationen in Form von elektrischen Signalen zur Verfügung zu stellen. Üblicherweise ist die elektrische Heizvorrichtung dazu über einen Daten-Bus, zum Beispiel einen CAN- oder LIN-Bus, an ein Kraftfahrzeug-Bordnetzwerk zur Übertragung von Steuer- und Informationssignalen angeschlossen.

Da die elektrischen Zusatzheizungen im eingeschalteten Zustand eine hohe Leistungsaufnahme im Bereich von 1.000 W bis 2.000 W besitzen, wird das Kraftfahrzeugbordnetz entsprechend stark belastet. Damit der Zusatzheizer nicht mehr elektrische Leistung aus dem Bordnetz entnimmt, als für diesen bereitgestellt werden kann, wird zusätzlich ein entsprechendes Signal der elektrischen Zusatzheizung zugeführt.

Das Signal, das die zur Verfügung stehende elektrische Leistung angibt, wird entweder über den Datenbus der Heizvorrichtung geführt oder als separates Signal. Vorzugsweise wird zu diesem Zweck das DF-Signal des Generators des Kraftfahrzeugs verwendet. Das DF-Signal gibt die Auslastung des Kraftfahrzeuggenerators an. In Abhängigkeit von diesem Signal kann die elektrische Heizleistung so eingestellt werden, dass dem Generator nie mehr Leistung entnommen wird, als dieser gerade erzeugt. Somit kann erfolgreich verhindert werden, dass aufgrund einer negativen Ladebilanz der Batterie Energie entnommen werden muss.

Nachteilig an diesen herkömmlichen elektrischen Zusatzheizungen ist, dass diese mit externen Signalleitungen, insbesondere einem Datenbus, verbunden werden müssen. Der damit verbundene Mehraufwand ist gerade bei Fahrzeugen der unteren Preisklassen unverhältnismäßig groß, da in diesen Fahrzeugklassen verschiedene Varianten von Heiz-/Klimaanlagen zum Einsatz kommen. Zum einen müssen kostengünstige, einfache Anlagen, d.h. "manuelle" Klimaanlagen anschließbar sein, andererseits aber auch aufwendigere, komfortablere Anlagen mit einer "Klimaautomatik". Damit für alle Varianten einer Heiz-/Klimaanlage eine einzige Zusatzheizungsausführung verwendet werden kann, ist diese unnötig aufwendig und verursacht damit bei den günstigeren Kraftfahrzeugen unnötig hohe Kosten.

Aufgabe der Erfindung ist es daher, eine Steuerschaltung zum Betreiben einer elektrischen Heizvorrichtung, eine elektrische Heizvorrichtung und ein Verfahren zum Betreiben einer elektrischen Heizvorrichtung anzugeben, bei denen der Aufwand zur Ankopplung der Heizvorrichtung an externe Steuersignale verringert werden kann.

Diese Aufgabe wird mit den Merkmalen der unabhängigen Patentansprüche gelöst.

Gemäß einem ersten Aspekt der Erfindung wird eine Steuerschaltung zum Betreiben einer elektrischen Heizvorrichtung, insbesondere als Zusatzheizung für ein Kraftfahrzeug, angegeben. Die Heizvorrichtung umfasst PTC-Heizelemente und einen Temperatursensor, der die Temperatur der in die Heizvorrichtung strömenden Luft erfasst. Die Steuerschaltung enthält eine Speichereinrichtung zur Speicherung eines vorbestimmten Temperaturwertes. Ein Komparator vergleicht die von dem Temperatursensor erfasste Temperatur mit dem gespeicherten Temperaturschwellwert. Eine Aktivierungseinrichturig dient zur Freigabe oder Unterbrechung der Stromzufuhr zu den PTC-Heizelementen in Abhängigkeit von dem Vergleichsergebnis des Komparators.

Gemäß einem weiteren Aspekt der Erfindung wird eine Heizvorrichtung, insbesondere als Zusatzheizung für ein Kraftfahrzeug, angegeben. Die Heizvorrichtung enthält PTC-Heizelemente und einen Temperatursensor, der die Temperatur der in die Heizvorrichtung strömenden Luft erfasst. Außerdem umfasst die Heizvorrichtung eine Steuerschaltung zur Freigabe oder Sperrung der Stromzufuhr zu den PTC-Heizelementen. Die Steuerschaltung enthält eine Speichereinrichtung, einen Komparator und eine Aktivierungseinrichtung. Die Speichereinrichtung speichert einen vorbestimmten Temperaturschwellwert, der Komparator vergleicht die von dem Temperatursensor erfasste Temperatur mit dem gespeicherten Temperaturschwellwert und die Aktivierungseinrichtung dient zur Freigabe oder Sperrung der Stromzufuhr zu den PTC-Heizelementen in Abhängigkeit von dem Vergleichsergebnis des Komparators.

Gemäß einem weiteren Aspekt der Erfindung wird ein Verfahren zum Betreiben einer elektrischen Heizvorrichtung, insbesondere als Zusatzheizung für ein Kraftfahrzeug, angegeben. Die Heizvorrichtung enthält PTC-Heizelemente und einen Temperatursensor, der die Temperatur der in die Heizvorrichtung strömenden Luft erfasst. Zunächst wird ein aktueller Temperaturwert der in die Heizvorrichtung strömenden Luft erfasst. Anschließend wird der erfasste Temperaturwert mit einem gespeicherten, festen Temperaturschwellwert verglichen. In Abhängigkeit von dem Vergleichsergebnis wird die Stromzufuhr zu den PTC-Heizelementen freigegeben oder gesperrt.

Es ist die Grundidee der Erfindung, die Temperatur der in die Heizvorrichtung strömenden Luft zu erfassen. Die Heizleistung der Heizvorrichtung, insbesondere ein Ein-/Ausschalten, wird in Abhängigkeit von der Differenz zwischen dem erfassten Temperaturwert der zuströmenden Luft und einem gespeicherten, festen Temperaturwert gesteuert. Auf diese Weise kann sich die elektrische Zusatzheizung "selbst" steuern, ohne dass ein externes Signal zugeführt werden muss, das beispielsweise die Kühlwassertemperatur angibt.

Mit der vorliegenden Erfindung kann somit die elektrische Anbindung einer elektrischen Zusatzheizung in einem Kraftfahrzeug an das Kraftfahrzeugbordnetz vereinfacht werden und eine entsprechend kostengünstigere Ausführung des Zusatzheizung wird ermöglicht. Insbesondere kann auf den Anschluss an einen Daten-Bus eines Kraftfahrzeugbordnetzes verzichtet werden. Die Information zur Ein-/Ausschaltung wird allein in Abhängigkeit von der Temperatur der in die Heizvorrichtung strömenden Luft und der erfindungsgemäßen Steuerlogik eingestellt.

Vorzugsweise wird die Stromzufuhr zu den PTC-Heizelementen freigegeben, wenn die erfasste Temperatur den gespeicherten Temperaturwert unterschreitet. Damit kann auf einfache Weise sichergestellt werden, dass die Heizvorrichtung nur dann Strom dem Bordnetz entnimmt, wenn tatsächlich ein Heizbedarf vorhanden ist. Ein externes Steuersignal oder ein vom Benutzer zugeführtes Signal sind dazu nicht erforderlich.

Vorzugsweise liegt der Temperaturschwellwert im Bereich zwischen 5°C und 15°C, ganz vorzugsweise zwischen 8°C und 10°C. Mit diesen Temperaturwerten kann sichergestellt werden, dass die elektrische Heizvorrichtung nur dann eingeschaltet ist, wenn im Innenraum des Kraftfahrzeugs tatsächlich ein Heizbedarf besteht.

Gemäß einer bevorzugten Ausführungsform wird der Start des Kraftfahrzeugs erfasst und die Heizvorrichtung nur dann eingeschaltet, wenn ein Heizbedarf beim Einschalten des Kraftfahrzeugs besteht. Damit kann in einfacher Weise die geringe Abwärme des Kraftfahrzeugsmotors beim Start überbrückt werden.

Gemäß einer weiter bevorzugten Ausführungsform wird die Zeit erfasst, die seit der Abschaltung des Motors verstrichen ist. Damit lässt sich in einfacher Weise feststellen, ob die Kühlwasserrestwärme zur Beheizung des Innenraums ausreichend ist.

Gemäß einer weiter bevorzugten Ausführungsform wird eine vorbestimmte Zeitdauer fest gespeichert. Beim Start des Motors wird die seit der Abschaltung des Motors verstrichene Zeit mit der vorbestimmten Zeitdauer verglichen. Unterschreitet die erfasste Zeitdauer den vorbestimmten Wert, so wird die Zufuhr von Strom zu den PTC-Heizelementen gesperrt.

Die vorbestimmte Zeitdauer, die mit der erfassten Zeitdauer verglichen wird, liegt dabei vorzugsweise im Bereich von 1 bis 5 Stunden, ganz vorzugsweise im Bereich zwischen 2 bis 3 Stunden. Damit kann auf einfache Weise sichergestellt werden, dass die Restwärme des Motors bei der Entscheidung, ob die elektrische Heizvorrichtung eingeschaltet ist, berücksichtigt wird.

Gemäß einer alternativen Ausführungsform wird der gespeicherte Temperaturschwellwert vor dem Vergleich mit der erfassten Temperatur der Zuluft bewertet. Damit lassen sich in einfacher Weise Zusatzeinflüsse zusätzlich zu der Lufttemperatur auf die Beurteilung, ob die Heizvorrichtung einzuschalten ist, berücksichtigen.

Vorzugsweise wird der gespeicherte Temperaturschwellwert in Abhängigkeit von der seit dem Abschalten des Motors verstrichenen Zeit angehoben, und zwar so, dass sich der angehobene Temperaturschwellwert mit zunehmender Zeitdauer dem gespeicherten Temperaturschwellwert annähert. Damit kann die im Motor noch vorhandene Restwärme in einfacher Weise berücksichtigt werden.

Gemäß einer weiter bevorzugten Ausführungsform wird der gespeicherte Temperaturschwellwert so abgeändert, dass dieser zunächst auf einen erhöhten Temperaturschwellwert angehoben und mit zunehmender Zeitdauer, die seit der Motorabschaltung verstrichen ist, auf den gespeicherten Temperaturschwellwert abgesenkt wird.

Vorzugsweise wird der gespeicherte Temperaturschwellwert in einem Zeitintervall zwischen einem ersten vorgegebenen Zeitpunkt nach dem Abschalten des Motors bis zu einem zweiten vorgegebenen Zeitpunkt nach dem Abschalten des Motors von einem erhöhten Temperaturschwellwert auf den gespeicherten Temperaturschwellwert abgesenkt. Auf diese Weise kann ein abrupter Temperatursprung in dem Kraftfahrzeuginnenraum zugeführten Luft vermieden werden.

Die Stromzufuhr zu den PTC-Heizelementen wird zwischen dem Abschalten des Motors und dem ersten vorgegebenen Zeitpunkt nach dem Abschalten des Motors unterbrochen. Damit wird die elektrische Zusatzheizung unabhängig von dem Temperaturwert innerhalb des Zeitraums bis zum ersten vorgegebenen Zeitpunkt nicht eingeschaltet und ein unnötiger Verbrauch an elektrischer Energie aus dem Bordnetz wirksam vermieden.

Gemäß einer weiter bevorzugten Ausführungsform ist die von den PTC-Heizelementen im eingeschalteten Zustand abgegebene Energie einstellbar. Damit kann in einfacher Weise die Heizleistung an die beispielsweise vom Innenraum vorgegebene Wunschtemperatur angepasst werden.

Vorzugsweise wird die Heizleistung der PTC-Heizelemente in Abhängigkeit von der im Bordnetz des Kraftfahrzeugs verfügbaren elektrischen Energie eingestellt. Auf diese Weise lässt sich sicher verhindern, dass das Bordnetz überlastet und Energie aus der Fahrzeugbatterie entnommen wird.

Die im Bordnetz des Kraftfahrzeugs verfügbare Strommenge wird vorzugsweise über eine externe Signalleitung der Steuerschaltung zugeführt. Insbesondere wird dazu das DF-Signal des Kraftfahrzeuggenerators verwendet.

Gemäß einer weiter bevorzugten Ausführungsform wird die Heizleistung der PTC-Heizelemente in Abhängigkeit von der erfassten Temperatur der Zuluft eingestellt.

Damit kann in einfacher Weise die der jeweiligen Situation angepasste Heizleistung eingestellt werden.

Vorzugsweise wird die Heizleistung der PTC-Heizelemente beim Betrieb auf einen Maximalwert eingestellt, solange die erfasste Zulufttemperatur kleiner als eine erste vorgegebene Temperatur ist. In dem sich daran anschließenden Temperaturbereich ist die Heizleistung dann schrittweise oder kontinuierlich absenkbar. Damit kann ein Übergangsbereich zwischen dem maximalen Heizleistungsbereich und einem Temperaturbereich, in dem keine Heizleistung erforderlich ist, realisiert werden. Auf diese Weise entsteht kein unangenehmer Temperatursprung im Kraftfahrzeuginnenraum bei der automatischen Abschaltung der Heizleistung, sondern die Heizleistung wird mit Erreichen des ersten Schwellwertes heruntergefahren, und zwar vorzugsweise bis zum Erreichen einer zweiten vorgegebenen Temperatur der einströmenden Luft.

Vorzugsweise wird die Heizleistung des elektrischen Zusatzheizers bei Erreichen einer Schwelltemperatur zwischen 10°C und 25°C, ganz vorzugsweise zwischen 18°C und 22°C reduziert. In einem Temperaturbereich zwischen 50°C und 90°C, vorzugsweise zwischen 75°C und 85°C der einströmenden Luft erreicht die Heizleistung des Zusatzheizers den Wert Null.

Weitere vorteilhafte Ausgestaltungen der Erfindung sind Gegenstand der Unteransprüche.

Im Folgenden wird die vorliegende Erfindung anhand bevorzugter Ausführungsformen in Zusammenhang mit den beiliegenden Zeichnungen erläutert. Dabei zeigen die Zeichnungen im Einzelnen:
- Fig. 1: eine perspektivische Ansicht einer beispielhaften Ausgestaltung einer elektrischen Heizvorrichtung mit einer integrierten Steuerschaltung;
- Fig. 2: eine schematische Darstellung des geschichteten Aufbaus, der in der Heizvorrichtung gemäß Fig. 1 angeordneten Heizelemente und Radiatorelemente;
- Fig. 3: ein Diagramm mit einer schematischen Darstellung der Modifikation des Temperaturschwellwertes ϑ_{V} in Abhängigkeit von der Zeit Tₐᵤₛ, die seit der Abschaltung des Motors verstrichen ist;
- Fig. 4: ein Diagramm mit einer schematischen Darstellung der Abhängigkeit der von der elektrischen Heizvorrichtung zu erbringenden Heizleistung P und der Temperatur ϑ_{In} der in die Heizvorrichtung einströmenden Luft; und
- Fig. 5: ein Blockschaltbild einer beispielhaften Ausführungsform einer Steuerschaltung gemäß der vorliegenden Erfindung.

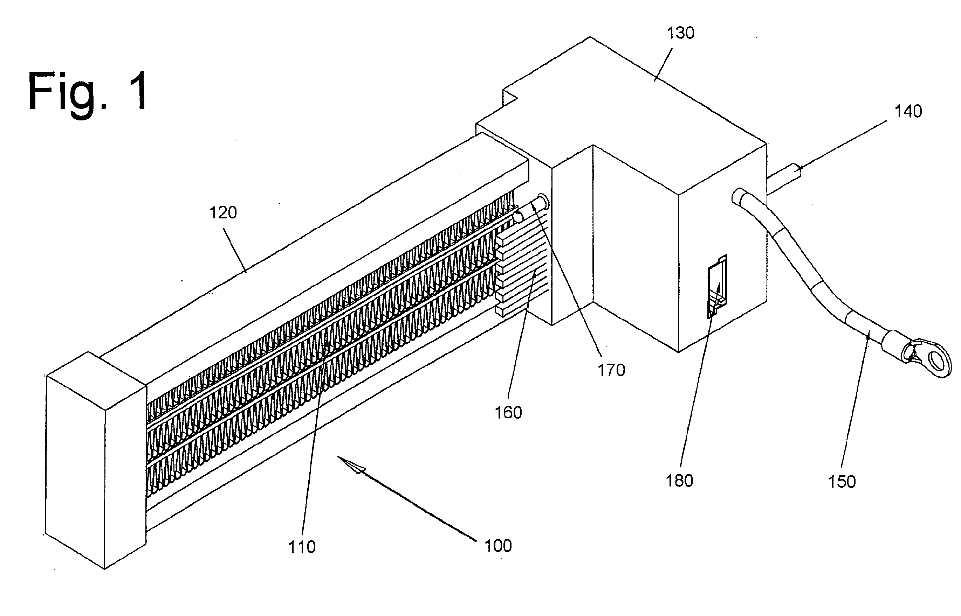

In Fig. 1 ist eine perspektivische Ansicht einer möglichen Ausführungsform der erfindungsgemäßen Zusatzheizung 100 dargestellt. Die Zusatzheizung besitzt eine Heizregister 110 aus Radiatorelementen und in diesen angeordneten PTC-Heizelementen. Das Heizregister 110 ist in einem Metall oder Kunststoffgehäuse 120 angeordnet. Vorzugsweise werden die Bestandteile unter einer Klemmpressung gehalten, um die Effizienz der PTC-Heizelemente zu erhöhen, und zwar durch eine Verbesserung der thermischen und elektrischen Kontaktierung.

In einem seitlich an das Gehäuse 120 des Heizregisters 110 anschließenden Gehäuseabschnitt 130 ist eine Steuerschaltung angeordnet. Die Steuerschaltung bestimmt, wann den PTC-Heizelementen Strom zugeführt wird und welche Strommengen. Dazu besitzt die Steuerschaltung einen Plusanschluss 140 und einen Masseanschluss 150. In Abhängigkeit von der internen Steuerlogik, einem über den Signalstecker 180 zugeführten Signal und der Ausgabe des Temperatursensors 170 führt die Steuerschaltung den PTC-Heizelementen Strom zu. Zur Schaltung des Stroms werden Leistungshalbleiterbauelemente verwendet. Die Abwärme dieser Halbleiterleistungsbauelemente wird über in den Luftstrom ragende Luftfahnen der Kühlelemente 180 dem zu erwärmenden Luftstrom zugeführt.

Der Temperatursensor 170 ist so angeordnet, dass er im Luftstrom der aufzuheizenden Luft liegt. Dadurch kann der Temperatursensor 170 die Temperatur der zuströmenden Luft erfassen und an die Steuerschaltung weitergeben. Der Temperatursensor 170 ist auch in anderer Weise als in Fig. 1 dargestellt an dem Gehäuse montierbar, solange sichergestellt ist, dass er durch die Heizleistung des Heizregisters nicht beeinflusst wird.

Über den Signalstecker 180 wird der Steuerschaltung vorzugsweise ein externes Signal zugeführt, das die im Kraftfahrzeugbordnetz verfügbare elektrische Leistung angibt. Damit kann die Steuerschaltung selbsttätig einstellen, wie viel an Leistung sie über die Anschlüsse 140, 150 dem Bordnetz entnimmt. Eine Überlastung des Bordnetzes und eine Entladung der Fahrzeugbatterie kann damit wirksam verhindert werden.

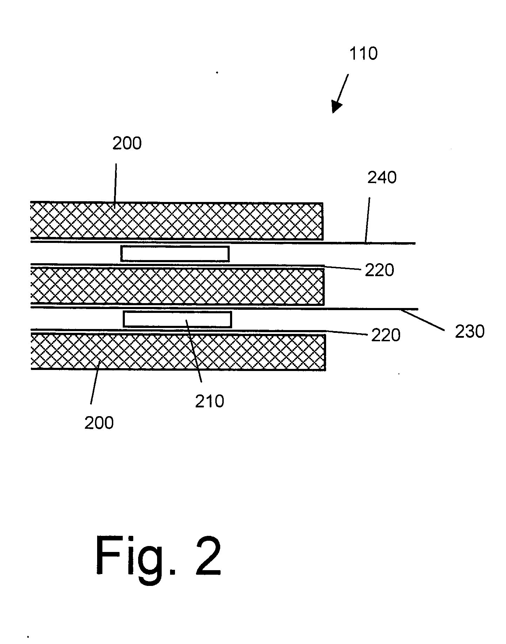

Der Aufbau des Heizregisters 110 ist in Fig. 2 schematisch dargestellt. Zwischen den Radiatorelementen 200 sind PTC-Heizelemente 210 angeordnet. Die beiden gezeigten PTC-Heizelemente 210 stehen mit den Radiatorelementen 200 in wärmeleitender Verbindung. Über die Radiatorelemente 200 wird die von dem PTC-Heizelement 210 erzeugte Wärme an die durch die Radiatorelemente 200 strömende Luft abgegeben.

Auf beiden Seiten der PTC-Heizelemente 210 sind Kontaktbleche 220, 230, 240 angeordnet. Über diese Kontaktbleche wird dem PTC-Heizelement 210 Strom zugeführt. Dazu müssen nicht alle Kontaktbleche 220, 230, 240 selbst mit einem Stromanschluss versehen sein. In Fig. 2 sind zwei Kontaktbleche 230, 240 dargestellt, die aus der Heizfläche nach rechts herausgeführt sind. Die beiden herausgeführten Kontaktbleche 230, 240 können mit entgegengesetztem Strompotential verbunden werden. Das Kontaktblech 220 wird vorzugsweise über das dazwischenliegende elektrisch leitende ausgebildete Radiatorelement 200 ebenfalls auf das Potential des Kontaktblechs 230 gelegt. Auf diese Weise genügt eine geringe Anzahl von Anschlüssen zur Stromzuführung zu den PTC-Heizelementen.

Der in Fig. 2 gezeigte Aufbau stellt nur schematisch das Anordnungsprinzip dar. Vorzugsweise ist der Aufbau unter einer Klemmpressung gehalten, so dass ein besonders guter thermischer und elektrischer Übergang zwischen dem PTC-Heizelement 210 und den Kontaktblechen 220, 230 und 240 besteht.

Um die Anzahl der der Zusatzheizung zuzuführenden elektrischen Signale möglichst gering zu halten, ist der Temperatursensor 170 in die Heizvorrichtung integriert. Der Temperatursensor 170 misst die Temperatur ϑ_{In}, der in die elektrische Zusatzheizung einströmenden Luft. Dabei hat die in die Zusatzheizung einströmende Luft die Temperatur ϑ_{In} der aus dem Wasserwärmetauscher austretenden Luft.

Das einzige Signal, das der elektrischen Zusatzheizung aus dem Bordnetz des Kraftfahrzeugs zugeführt wird, ist das DF-Signal. Das DF-Signal ist ein Maß für die Auslastung des Kraftfahrzeuggenerators, wobei die Auslastung über das Tastverhältnis des DF-Signals angegeben wird. Zur Abbildung der elektrischen Erregung des Generator-Rotors wird das DF-Signal oft in einem Wertebereich von 0% bis 100% angegeben. Die Angabe von 0% bedeutet fast keine Erregung und damit keine Leistungsabgabe an das Bordnetz. 100% dagegen bedeutet maximale Erregung und damit maximale Leistungsabgabe an das Bordnetz bei unveränderter Bordnetzspannung (z.B. 14,5 V). Bei weiterer Erhöhung der Leistungsentnahme aus dem Bordnetz bei einer Erregung von 100% beginnt die Bordnetzspannung abzusinken. Vorzugsweise wird die Leistungsentnahme aus dem Bordnetz so eingestellt, dass eine Erregung, also Generatorauslastung, von 95% erreicht wird.

Mit Hilfe des DF-Signals kann die Leistungsaufnahme der elektrischen Zusatzheizung an die Auslastung des Kraftfahrzeuggenerators angepasst werden. Das DF-Signal ist in jedem Kraftfahrzeug vorhanden und direkt am Fahrzeuggenerator abgreifbar.

Eine alternative Vorgehensweise zur Einstellung der maximal dem Bordnetz entnommenen Leistung beruht auf der Erfassung und Auswertung der Bordnetzspannung. Auch über die Bordnetzspannung lässt sich erkennen, ob der Generator in der Lage ist, dem Bordnetz zusätzliche Leistung zuzuführen. Es ist der besondere Vorteil dieser Variante, dass der elektrischen Zusatzheizung im Kraftfahrzeug zu diesem Zweck kein externes Signal zugeführt werden muss, so dass die Zusatzheizung von externen Signalen völlig unabhängig ist. Dadurch ist der Einbau einer solchen Zusatzheizung in ein Kraftfahrzeug besonders einfach und kostengünstig.

Zur Bestimmung der Generatorauslastung wird gemäß dieser Alternative die Bordnetzspannung von der Zusatzheizung kontinuierlich überwacht. Die Leistungsaufnahme durch die Zusatzheizung wird immer so eingestellt, dass die Bordnetzspannung einen vorgegebenen Mindestwert nicht unterschreitet, beispielsweise einen Wert in der Größenordnung von 14V.

Der Generatorregler, d.h. der Regler der Lichtmaschine des Kraftfahrzeugs, hält durch Änderung der Generator-Erregung die Bordnetzspannung stabil auf einem konstanten Wert. Sobald die maximale Erregung erreicht ist, beginnt die Bordnetzspannung jedoch abzusinken, da sie nicht mehr durch eine Erhöhung der Erregung kompensierbar ist. Die Bordnetzspannung sinkt bei einer weiteren Erhöhung der Leistungsentnahme bis auf einen Wert von etwa 12 V bis 12,5 V ab. Bei dieser Spannung wird zusätzliche elektrische Leistung der Batterie des Kraftfahrzeugs entnommen.

Da sich gezeigt hat, dass die Bordnetzspannung tatsächlich schon bei einem Auslastungsgrad des Generators im Bereich von etwa 85% leicht abzusinken beginnt, lässt sich die Leistungsentnahme der Zusatzheizung sicher auf einen vorbestimmten Auslastungsgrad des Generators einstellen, vorzugsweise liegt der Auslastungsgrad im Bereich von 90% bis 100%, ganz vorzugsweise in der Größenordnung von 95%.

Die Generatorspannung kann Hersteller- und Fahrzeugtyp-abhängig basierend auf der Außentemperatur verändert werden. Insbesondere wird die Fahrzeugspannung bei niedrigen Temperaturen angehoben. Entsprechend wird auch der Spannungswert des Bordnetzes, der einem bestimmten Auslastungsgrad entspricht und nicht unterschritten werden darf, in der elektrischen Zusatzheizung angehoben. Im allgemeinen wird die Spannung dabei in einem Bereich zwischen 14,0 V und 14,5 V variiert. Bei neueren Batterien und Fahrzeugtypen kann die Ladespannung temperaturabhängig zwischen etwa 14,0 V und 15,5 V eingestellt werden. Das wird durch ein geändertes chemisches System der Batterie ermöglicht.

Während heutzutage das Bordnetz eines Kraftfahrzeugs mit einer Spannung von 12 V betrieben wird, werden zukünftige Bordnetze eine Spannung 42 V aufweisen und deutlich höhere Leistungen bereitstellen. Dadurch kann die zu Heizzwecken dem Bordnetz entnommene elektrische Leistung ebenfalls deutlich erhöht werden. Die oben angegebenen Spannungswerte werden bei einer Erhöhung der Bordnetzspannung entsprechend eingestellt.

Das Einschalten der elektrischen Zusatzheizung erfolgt nur bei laufendem Motor, also dann, wenn elektrische Leistung vom Generator erzeugt wird. Damit wird vermieden, dass elektrische Leistung zur Heizung der Batterie entnommen wird. Zu diesem Zweck beobachtet die Steuerschaltung der Heizvorrichtung die Bordnetzspannung des Kraftfahrzeugs.

Ein Startvorgang lässt sich anhand der Bordnetzspannung unter anderem daran erkennen, dass die Bordnetzspannung schlagartig einbricht und dann allmählich wieder auf den Ausgangswert und darüber ansteigt.

Bei einer Batteriespannung, die beispielsweise zwischen 12,0 und 12,5 Volt liegt, bricht die Bordnetzspannung beim Starten des Motors schlagartig auf einen Wert in der Größenordnung von 6,0 Volt ein. Anschließend steigt die Bordnetzspannung allmählich wieder an.

Eine andere Möglichkeit zur Erfassung des Startvorgangs über die Bordnetzspannung besteht in der direkten Auswertung der Höhe der Spannung. Bei ausgeschaltetem Motor gibt der Generator keine Leistung ab und die Bordnetzspannung entspricht der Batterie-(Entlade)-Spannung. Diese liegt typischerweise in einem Bereich von 12,0 und 12,5 Volt. Bei laufendem Motor erhöht sich die Bordnetzspannung auf die Batterieladespannung. Diese liegt typischerweise in einem Bereich zwischen 14,0 und 14,5 Volt.

Die elektrische Zusatzheizung wird aktiviert, wenn beim Einschalten der Zündung, d.h. beim Starten des Motors, die gemessene Temperatur ϑ_{In} unterhalb eines Vorgabewertes ϑ_{V} liegt. Ein solcher Vorgabewert ϑ_{V} liegt beispielsweise in der Größenordnung von 10°C. Beim Starten des Motors entspricht die gemessene Temperatur ϑ_{In} der tatsächlichen Außentemperatur ϑ_{A}.

Die gemessene Temperatur ϑ_{In} weicht jedoch von der Außentemperatur ϑ_{A} ab, wenn der Motor noch Restwärme aufweist, beispielsweise weil er erst kurze Zeit zuvor abgeschaltet worden ist. In einem solchen Fall erfasst der Temperatursensor 170 nicht die Außentemperatur, sondern die über die Restwärme des Wärmetauschers angewärmte Umgebungsluft.

Um ein unnötiges Einschalten der elektrischen Zusatzheizung zu vermeiden, wird die Zeit erfasst, die seit dem letzten Ausschalten des Motors verstrichen ist. Überschreitet die erfasste Zeit Tₐᵤₛ nicht einen vorgegebenen Mindestwert T_{Min}, dann wird die Zusatzheizung nicht eingeschaltet.

Erst bei Überschreiten des vorgegebenen Mindestwertes T_{Min} wird beim nächsten Motorstart die Zusatzheizung eingeschaltet - vorausgesetzt, das dafür erforderliche Temperatur-Einschaltkriterium ist erfüllt. Typische Zahlenwerte für den Mindestzeitwert Tₘᵢₙ liegen im Bereich mehrerer Stunden.

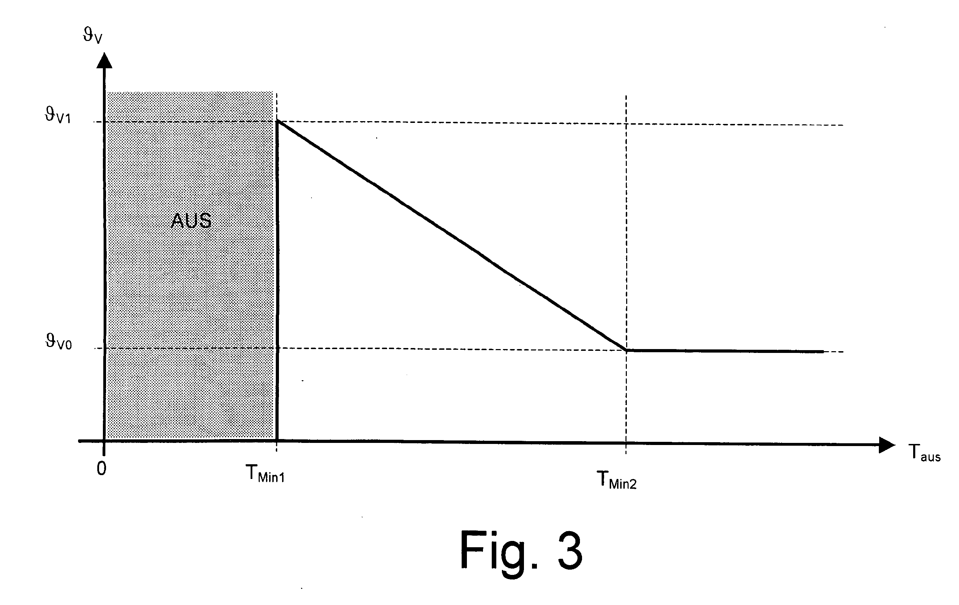

Anstelle der Sperrung der Stromzufuhr zu dem PTC-Heizelementen in Abhängigkeit von der Zeit Tₐᵤₛ, die seit dem letzten Abschalten des Motors verstrichen ist, kann der erfasste Zeitwert Tₐᵤₛ auch zur Modifikation des Temperaturschwellwertes ϑ_{V} verwendet werden. Wie in Fig. 3 dargestellt, ändert sich der der Vergleichseinrichtung zugeführte Temperaturschwellwert ϑ_{V} in Abhängigkeit von der verstrichenen Zeit Taus.

Innerhalb eines ersten Zeitintervalls bis zur vorgegebenen Zeit T_{Min1} bleibt die Stromzufuhr zu den PTC-Heizelementen gesperrt. Auch unabhängig von dem Temperatureinschaltkriterium wird die elektrische Zusatzheizung nicht aktiviert.

Innerhalb des Zeitintervalls T_{Min1} bis T_{Min2} wird der Temperaturschwellwert ϑ_{V} von einem Wert ϑ_{V1} allmählich bis zu dem gespeicherten unteren Temperaturschwellwert ϑ_{V0} abgesenkt. Je kürzer die seit der letzten Abschaltung des Motors verstrichene Zeit ist, umso höher ist der Temperaturschwellwert ϑ_{V} und umso mehr wird der gespeicherte untere Schwellwert ϑ_{V0} angehoben. Mit Zunahme der verstrichenen Zeit Tₐᵤₛ geht der Temperaturschwellwert ϑ_{V} in den Wert ϑ_{V0} über. Sobald die Zeit, die seit dem letzten Abschalten des Motors verstrichen ist, den Wert T_{Min2} überschreitet, wird der minimale Temperaturschwellwert ϑ_{V0} verwendet. Der Schwellwert T_{Min2} ist so eingestellt, dass der Motor ab diesem Zeitpunkt vollständig ausgekühlt ist.

Sobald die Steuerschaltung den PTC-Heizelementen Strom zuführt, wird die dem Kraftfahrzeuginnenraum zugeführte Luft entsprechend aufgeheizt. Vorzugsweise arbeitet die Zusatzheizung mit der in Abhängigkeit von dem Bordnetz maximal möglichen Heizleistung. Die individuelle Raumtemperaturregulierung erfolgt über eine Luftklappensteuerung zur Mischung von warmer und kalter Luft.

Sobald der Wasserwärmetauscher ausreichend Heizwärme abgibt, wird die Zusatzheizung abgeschaltet, und zwar in Abhängigkeit von der gemessenen Temperatur der in die Zusatzheizung einströmenden Luft. Mit dem Abschalten wird der in den Innenraum strömenden Luft jedoch schlagartig eine große Menge an Heizenergie entzogen. Dieser Temperatursprung ist auch im Innenraum über den Temperatursprung der in das Fahrzeuginnere strömenden Luft bemerkbar.

Um eine allmähliche Temperaturabschaltung zu ermöglichen, wird die Heizleistung der elektrischen Zusatzheizung in Abhängigkeit beispielsweise von der Kühlwassertemperatur abgeschaltet. Mit steigender Kühlwassertemperatur reduziert sich die Heizleistung der Zusatzheizung allmählich auf Null.

Um jedoch die Zuführung eines solchen externen Temperatursignals zu vermeiden, wird die Heizleistung der elektrischen Zusatzheizung ebenfalls in Abhängigkeit von der gemessenen Temperatur ϑ_{In} reduziert. Ab Erreichen einer bestimmten Temperatur ϑ_{In1} wird die Heizleistung von der maximal möglichen Heizleistung P_{Max} mit zunehmender Temperatur der einströmenden Luft auf den Wert P=0 bei Erreichen der Temperatur ϑ_{In2} heruntergefahren.

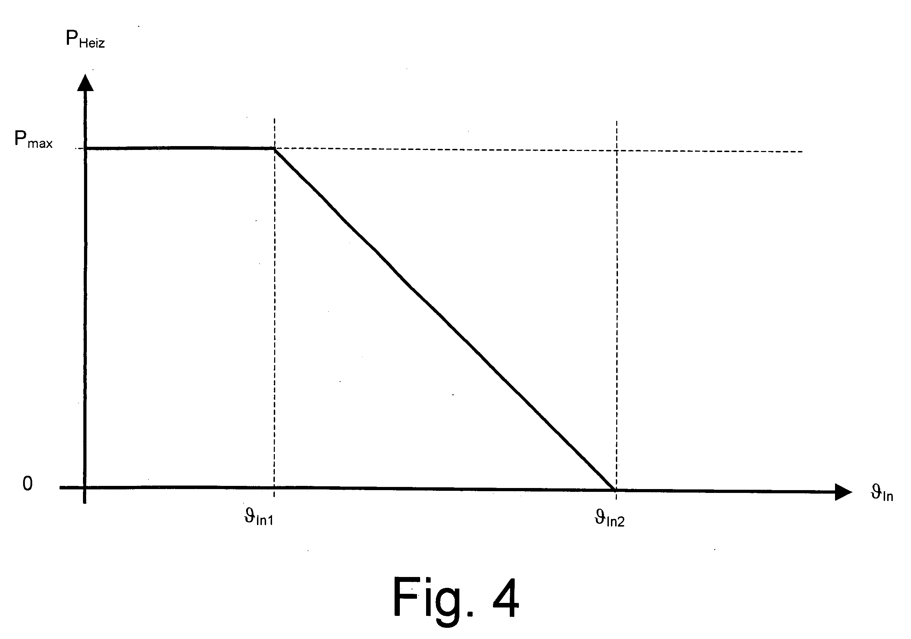

Dieser Zusammenhang ist in Fig. 4 schematisch dargestellt. Die Heizleistung P_{Heiz} wird nach dem Einschalten der Zusatzheizung von dem Wert Pₘₐₓ ab Erreichen der Temperatur ϑ_{In1} der einströmenden Luft kontinuierlich auf den Wert Null heruntergefahren. Ab dem Wert ϑ_{In2} wird von der Zusatzheizung keine Heizleistung mehr abgegeben. Typische Werte für die Temperaturgrenzen ϑ_{In1} und ϑ_{In2} sind 20°C und 80°C. Damit kann ein für den Passagier im Innenraum des Kraftfahrzeugs unmerklicher Übergang in einfacher Weise, d.h. ohne externe Steuersignale, erreicht werden.

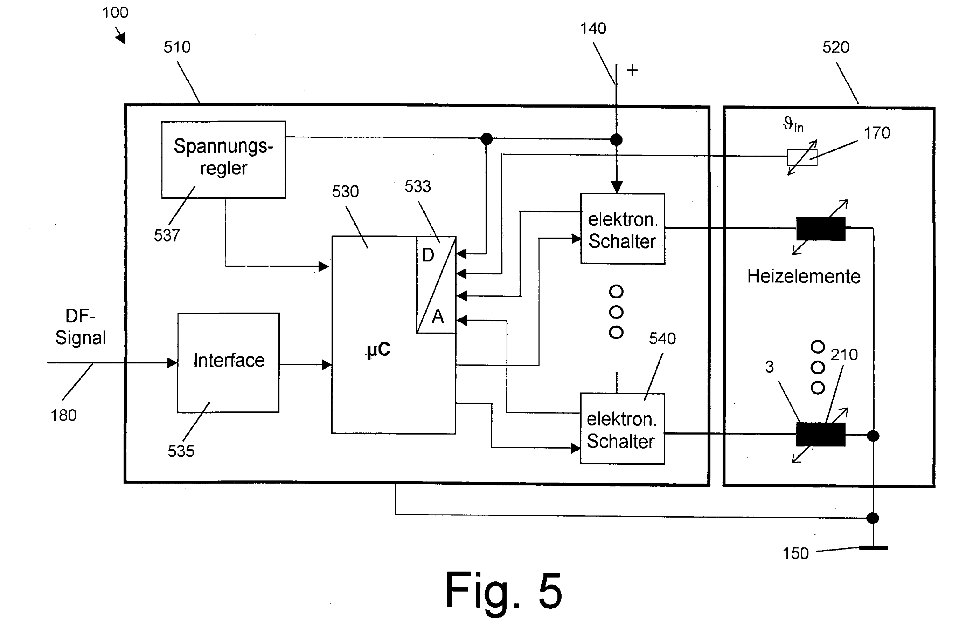

Eine detaillierte Realisierung einer elektrischen Zusatzheizung 100 ist in Fig. 5 in blockdiagrammartiger Form wiedergegeben.

Die elektrische Zusatzheizung umfasst eine Steuerschaltung 510 und ein Heizregister 520. Dem Gehäuse des Heizregisters 520 ist in dem Schaltungsaufbau der Fig. 5 ebenfalls der Temperatursensor 170 zugeordnet, der auf der das Heizregister anströmenden Seite angeordnet ist. Der von dem Temperatursensor 170 erfasste Wert wird an die Steuerschaltung 510 geleitet und über einen Analog/Digital-Wandler 533 einer Recheneinheit 530 zugeführt. In Abhängigkeit von dem zugeführten Temperaturwert ϑ_{In} steuert die Recheneinheit 530 elektronische Schalter 540. Die elektronischen Schalter 540, die vorzugsweise als Leistungshalbleiter ausgebildet sind, führen Strom von dem Anschluss 140 den Heizelementen 210 zu.

Zur maximalen Begrenzung der Leistung, die über den Anschluss 140 dem Kraftfahrzeugbordnetz entnommen wird, erfasst die Steuerschaltung 510 über das DF-Signal 180 die im Kraftfahrzeug verfügbaren elektrischen Leistungsreserven. Das DF-Signal wird über eine Schnittstelleneinrichtung 535 der Recheneinheit 530 zugeführt.

Außerdem enthält die Steuerschaltung 510 einen Spannungsregler 537, der die Betriebsspannung für die Recheneinheit 530 bereitstellt, in der Regel in der Höhe von 5 V.

Zur Erfassung der Spannung des Bordnetzes wird diese direkt vom Anschluss 140 über den Analog/Digital-Wandler der Recheneinheit 530 zuführt. Mit Hilfe der gemessenen Spannung des Bordnetzes kann beispielsweise sicher ein Startvorgang des Motors erfasst werden.

Der Temperatursensor 170 ist vorzugsweise so an der elektrischen Zusatzheizung montiert, dass er durch die Erwärmung der Heizelemente der Zusatzheizung nicht beeinflusst wird. Neben der in Fig. 1 gezeigten Position für den Temperatursensor 170 ist eine Vielzahl weiterer Positionen möglich.

Die Steuerschaltung 510 ist vorzugsweise mit dem Heizregister 520 in einem Gehäuse integriert. Dazu kann die Steuerschaltung an einer der Stirnseiten des Heizregisters befestigt sein; es ist jedoch ebenfalls eine aufsteckbare oder separate, aber benachbarte Anordnung des Heizregisters 520 und der Steuerschaltung 510 möglich.

Zusammengefasst betrifft die vorliegende Erfindung eine elektrische Heizvorrichtung, insbesondere als Zusatzheizung für ein Kraftfahrzeug, und eine Steuerschaltung für eine elektrische Heizvorrichtung, die einen im Wesentlichen autarken Betrieb der Zusatzheizung ermöglichen. Die Heizleistungssteuerung erfolgt über einen in die Zusatzheizung integrierten Temperatursensor und vorab in der Steuerschaltung gespeicherten Grenzwerten.

## Patentansprüche

1. Steuerschaltung zum Betreiben einer elektrischen Heizvorrichtung (100), insbesondere als Zusatzheizung für ein Kraftfahrzeug, wobei die Heizvorrichtung PTC-Heizelemente (210) und einen Temperatursensor (170) umfaßt, der die Temperatur (ϑ_{In}) der in die Heizvorrichtung strömenden Luft erfaßt, umfassend:
eine Speichereinrichtung zur Speicherung eines vorbestimmten Temperaturschwellwertes (ϑ_{V}),
einen Komparator zum Vergleich der von dem Temperatursensor (170) erfaßten Temperatur (ϑ_{In}) mit dem gespeicherten Temperaturwertschwellwert (ϑ_{V0}) und
eine Aktivierungseinrichtung zur Freigabe oder Unterbrechung der Stromzufuhr zu den PTC-Heizelementen (210) in Abhängigkeit von dem Vergleichsergebnis des Komparators.

2. Steuerschaltung nach Anspruch 1, wobei die Aktivierungseinrichtung die Stromzufuhr freigibt, wenn die erfasste Temperatur (ϑ_{In}) unter dem Temperaturwertschwellwert (ϑ_{V}) liegt.

3. Steuerschaltung nach Anspruch 1 oder 2, wobei der Temperaturschwellwert (ϑ_{V}) im Bereich zwischen 5°C und 15°C , vorzugsweise zwischen 8°C und 10°C liegt.

4. Steuerschaltung nach einem der Ansprüche 1 bis 3 mit einer Detektionseinrichtung zur Erfassung eines Starts und/oder einer Abschaltung des Motors des Kraftfahrzeugs.

5. Steuerschaltung nach einem der Ansprüche 1 bis 4 mit einer Zeiterfassungseinrichtung zur Erfassung der Zeitdauer (Tₐᵤₛ), die seit der Abschaltung des Motors verstrichen ist.

6. Steuerschaltung nach Anspruch 5, wobei
die Speichereinrichtung eine vorbestimmte Zeitdauer (T_{Min}) speichert,
die Steuerschaltung einen Komparator umfasst, der eine Zeitdauer (Taus), die seit der Abschaltung des Motors verstrichen ist, mit der vorbestimmten Zeitdauer (T_{Min}) vergleicht und
die Aktivierungseinrichtung die Zufuhr von Strom zu den PTC-Heizelementen (210) sperrt, wenn die erfasste Zeitdauer (Taus) die vorbestimmte Zeitdauer (Tₘᵢₙ) unterschreitet.

7. Steuerschaltung nach Anspruch 6, wobei die gespeicherte Zeitdauer (T_{Min}) im Bereich von 1 bis 5 Stunden, vorzugsweise zwischen 2 und 3 Stunden liegt.

8. Steuerschaltung nach einem der Ansprüche 1 bis 5 mit einer Modifikationseinrichtung zur Bewertung des gespeicherten Temperaturschwellwertes (ϑ_{V0}) vor dem Vergleich mit der erfaßten Temperatur (ϑ_{In}).

9. Steuerschaltung nach Anspruch 8, wobei die Modifikationseinrichtung den gespeicherten Temperaturschwellwert (ϑ_{V0}) in Abhängigkeit von der seit dem Abschalten des Motors verstrichenen Zeitdauer (Tₐᵤₛ) anhebt, und zwar so, dass sich der angehobene Temperaturschwellwert (ϑ_{V}) mit zunehmender Zeitdauer (Tₐᵤₛ) dem gespeicherten Temperaturschwellwert (ϑ_{V0}) annähert.

10. Steuerschaltung nach Anspruch 8 oder 9, wobei die Modifikationseinrichtung den gespeicherten Temperaturschwellwert (ϑ_{V0}) so abändert, dass der gespeicherte Temperaturschwellwert (ϑ_{V0}) zunächst auf einen erhöhten Temperaturschwellwert (ϑ_{V1}) angehoben und mit zunehmender Zeitdauer (Tₐᵤₛ) auf den gespeicherten Temperaturschwellwert (ϑ_{V0}) abgesenkt wird.

11. Steuerschaltung nach Anspruch 10, wobei die Modifikationseinrichtung den gespeicherten Temperaturschwellwert (ϑ_{V0}) in einem Zeitintervall zwischen einem ersten vorgegebenen Zeitpunkt (T_{Min1}) nach dem Abschalten des Motors bis zu einem zweiten vorgegebenen Zeitpunkt (T_{Min2}) nach dem Abschalten des Motors von einem vorgegebenen erhöhten Temperaturschwellwert (ϑ_{V1}) auf den gespeicherten Temperaturschwellwert (ϑ_{V0}) absenkt.

12. Steuerschaltung nach einem der Ansprüche 6 bis 11, wobei die Aktivierungseinrichtung die Stromzufuhr zu den PTC-Heizelementen (210) zwischen dem Abschalten des Motors und einem ersten vorgegebenen Zeitpunkt (T_{Min1}) nach dem Abschalten des Motors unterbricht.

13. Steuerschaltung nach einem der Ansprüche 1 bis 12 mit einer Leistungsregelungseinrichtung zur Einstellung der den PTC-Heizelementen (210) zugeführten Strommenge.

14. Steuerschaltung nach Anspruch 13, wobei die Leistungsregelungseinrichtung die Strommenge in Abhängigkeit von der im Bordnetz des Kraftfahrzeugs verfügbaren Strommenge einstellt.

15. Steuerschaltung nach Anspruch 14, wobei die Leistungsregelungseinrichtung die dem Bordnetz entnommene Strommenge in Abhängigkeit von der erfassten Höhe der Bordnetzspannung einstellt.

16. Steuerschaltung nach Anspruch 15, wobei die Leistungsregelungseinrichtung die dem Bordnetz entnommene Strommenge so einstellt, dass ein vorgegebener Wert der Bordnetzspannung nicht unterschritten wird.

17. Steuerschaltung nach Anspruch 16, wobei der vorgegebene Wert der Bordnetzspannung in Abhängigkeit von der erfassten Temperatur (ϑ_{In}) der Zuluft variiert, insbesondere bei tieferen Temperaturen angehoben wird.

18. Steuerschaltung nach Anspruch 14, wobei die Leistungsregelungseinrichtung mit einer externen Signalleitung verbindbar ist, die die im Bordnetz verfügbare Strommenge anzeigt.

19. Steuerschaltung nach Anspruch 18, wobei die externe Signalleitung das DF-Signal (180) eines Generators des Kraftfahrzeugs ist.

20. Steuerschaltung nach einem der Ansprüche 13 bis 19, wobei die Leistungsregelungseinrichtung die den PTC-Heizelementen (210) zugeführte Strommenge in Abhängigkeit von der erfassten Temperatur (ϑ_{In}) einstellt.

21. Steuerschaltung nach Anspruch 20, wobei die Leistungsregelungseinrichtung während der Freigabe der Stromzufuhr zu den PTC-Heizelementen (210) bei einer erfassten Temperatur (ϑ_{In}), die kleiner als eine erste vorgegebene Temperatur (ϑ_{In1}) ist, den PTC-Heizelementen (210) eine maximal verfügbare Strommenge zuführt.

22. Steuerschaltung nach Anspruch 21, wobei die Leistungsregelungseinrichtung die Stromzufuhr zu den PTC-Heizelementen (210) unterbricht, sobald die erfaßte Temperatur (ϑ_{In}) eine zweite vorgegebene Temperatur (ϑ_{In2}) erreicht.

23. Steuerschaltung nach Anspruch 21 oder 22, wobei die Leistungsregelungseinrichtung die den PTC-Heizelementen (210) zugeführte Strommenge in dem Temperaturintervall zwischen der ersten vorgegebenen Temperatur (ϑ_{In1}) und der zweiten vorgegebenen Temperatur (ϑ_{In2}) von einer maximal möglichen Heizleistung (Pₘₐₓ) auf Null reduziert.

24. Steuerschaltung nach einem der Ansprüche 21 bis 23, wobei die erste vorgegebene Temperatur (ϑ_{In1}) in einem Bereich von 10°C bis 25°C, vorzugsweise zwischen 18°C und 22°C liegt.

25. Steuerschaltung nach einem der Ansprüche 21 bis 24, wobei die zweite vorgegebene Temperatur (ϑ_{In2}) in einem Bereich von 50°C bis 90°C, vorzugsweise zwischen 75°C und 85°C liegt.

26. Elektrische Heizvorrichtung, insbesondere als Zusatzheizung für ein Kraftfahrzeug, mit PTC-Heizelementen (210) und einem Temperatursensor (170), der die Temperatur (ϑ_{In}) der in die Heizvorrichtung strömenden Luft erfaßt, und einer Steuerschaltung zur Freigabe oder Sperrung der Stromzufuhr zu den PTC-Heizelementen (210), wobei die Steuerschaltung gemäß einem der Ansprüche 1 bis 25 ausgebildet ist.

27. Verfahren zum Betreiben einer elektrischen Heizvorrichtung, insbesondere als Zusatzheizung für ein Kraftfahrzeug, wobei die Heizvorrichtung PTC-Heizelemente (210) und einen Temperatursensor (170) umfaßt, der die Temperatur (ϑ_{In}) der in die Heizvorrichtung strömenden Luft erfaßt, mit den Schritten:
Erfassen der Temperatur der in die Heizvorrichtung strömenden Luft durch den Temperatursensor (170),
Vergleichen der von dem Temperatursensor (170) erfaßten Temperatur (ϑ_{In}) mit dem gespeicherten Temperaturwertschwellwert (ϑ_{V}) und
Freigeben oder Sperren der Stromzufuhr zu den PTC-Heizelementen (210) in Abhängigkeit von dem Vergleichsergebnis.

28. Verfahren nach Anspruch 27, wobei die Stromzufuhr freigegeben wird, wenn die erfasste Temperatur (ϑ_{In}) unter dem Temperaturwertschwellwert (ϑ_{V}) liegt.

29. Verfahren nach Anspruch 27 oder 28, wobei der Temperaturschwellwert (ϑ_{V}) im Bereich zwischen 5°C und 15°C , vorzugsweise zwischen 8°C und 10°C liegt.

30. Verfahren nach einem der Ansprüche 28 bis 29, mit den zusätzlichen Schritten:
Erfassen einer Zeitdauer (Tₐᵤₛ), die seit der Abschaltung des Motors verstrichen ist,
Vergleichen der Zeitdauer (Tₐᵤₛ), die seit der Abschaltung des Motors verstrichen ist, mit einer vorbestimmten Zeitdauer (T_{Min}) und
Sperren der Zufuhr von Strom zu den PTC-Heizelementen (210), wenn die erfasste Zeitdauer (Tₐᵤₛ) die vorbestimmte Zeitdauer (T_{Min}) unterschreitet.

31. Verfahren nach Anspruch 30, wobei die gespeicherte Zeitdauer (T_{Min}) im Bereich von 1 bis 5 Stunden, vorzugsweise zwischen 2 und 3 Stunden liegt.

32. Verfahren nach einem der Ansprüche 27 bis 29 mit dem weiteren Schritt der Bewertung des gespeicherten Temperaturschwellwertes (ϑ_{V0}) vor dem Vergleich mit der erfaßten Temperatur (ϑ_{In}).

33. Verfahren nach Anspruch 32, wobei der gespeicherte Temperaturschwellwert (ϑ_{V0}) in Abhängigkeit von der seit dem Abschalten des Motors verstrichenen Zeitdauer (Tₐᵤₛ) angehoben wird, und zwar so, dass sich der angehobene Temperaturschwellwert (ϑ_{V}) mit zunehmender Zeitdauer (Tₐᵤₛ) dem gespeicherten Temperaturschwellwert (ϑ_{V0}) annähert.

34. Verfahren nach Anspruch 32 oder 33, wobei der gespeicherte Temperaturschwellwert (ϑ_{V0}) so abgeändert wird, dass der gespeicherte Temperaturschwellwert (ϑ_{V0}) zunächst auf einen erhöhten Temperaturschwellwert (ϑ_{V1}) angehoben und mit zunehmender Zeitdauer (Tₐᵤₛ) auf den gespeicherten Temperaturschwellwert (ϑ_{V0}) abgesenkt wird.

35. Verfahren nach Anspruch 32, wobei der gespeicherte Temperaturschwellwert (ϑ_{V0}) in einem Zeitintervall zwischen einem ersten vorgegebenen Zeitpunkt (T_{Min1}) nach dem Abschalten des Motors bis zu einem zweiten vorgegebenen Zeitpunkt (T_{Min2}) nach dem Abschalten des Motors von einem vorgegebenen erhöhten Temperaturschwellwert (ϑ_{V1}) auf den gespeicherten Temperaturschwellwert (ϑ_{V0}) abgesenkt wird.

36. Verfahren nach einem der Ansprüche 27 bis 35, wobei die Stromzufuhr zu den PTC-Heizelementen (210) zwischen dem Abschalten des Motors und einem ersten vorgegebenen Zeitpunkt (T_{Min1}) nach dem Abschalten des Motors unterbrochen wird.

37. Verfahren nach einem der Ansprüche 27 bis 36, wobei die Heizleistung in Abhängigkeit von der im Bordnetz des Kraftfahrzeugs verfügbaren Leistung eingestellt wird.

38. Verfahren nach Anspruch 37, wobei die Heizleistung in Abhängigkeit von der erfassten Höhe der Bordnetzspannung eingestellt wird.

39. Verfahren nach Anspruch 38, wobei die dem Bordnetz entnommene Strommenge so eingestellt wird, dass ein vorgegebener Wert der Bordnetzspannung nicht unterschritten wird.

40. Verfahren nach Anspruch 39, wobei der vorgegebene Wert der Bordnetzspannung in Abhängigkeit von der erfassten Temperatur (ϑ_{In}) der Zuluft variiert wird, insbesondere bei tieferen Temperaturen angehoben wird.

41. Verfahren nach Anspruch 37, wobei die Heizleistung in Abhängigkeit von dem DF-Signal des Kraftfahrzeuggenerators eingestellt wird.

42. Verfahren nach einem der Ansprüche 27 bis 41, wobei die Heizleistung der PTC-Heizelemente (210) in Abhängigkeit von der erfassten Temperatur (ϑ_{In}) eingestellt wird.

43. Verfahren nach Anspruch 42, wobei die Heizleistung der PTC-Heizelemente (210) auf eine maximale Heizleistung bei Freigabe der Stromzufuhr zu den PTC-Heizelementen (210) bei einer erfassten Temperatur (ϑ_{In}), die kleiner als eine erste vorgegebene Temperatur (ϑ_{In1}) ist, eingestellt wird.

44. Verfahren nach Anspruch 43, wobei Heizleistung der PTC-Heizelemente (210) auf Null eingestellt wird, sobald die erfaßte Temperatur (ϑ_{In}) eine zweite vorgegebene Temperatur (ϑ_{In2}) erreicht.

45. Verfahren nach Anspruch 43 oder 44, wobei die Heizleistung der PTC-Heizelemente (210) in dem Temperaturintervall zwischen der ersten vorgegebenen Temperatur (ϑ_{In1}) und der zweiten vorgegebenen Temperatur (ϑ_{In2}) von einer maximal möglichen Heizleistung (Pₘₐₓ) auf Null reduziert wird.

46. Verfahren nach einem der Ansprüche 43 bis 45, wobei die erste vorgegebene Temperatur (ϑ_{In1}) in einem Bereich von 10°C bis 25°C, vorzugsweise zwischen 18°C und 22°C liegt.

## Geänderte Patentansprüche

### Geänderte Patentansprüche gemäss Regel 86(2) EPÜ.

**1.** Elektrische Heizvorrichtung, insbesondere als Zusatzheizung für ein Kraftfahrzeug, mit PTC-Heizelementen (210) und einem Temperatursensor (170), der die Temperatur (ϑ_{In}) der in die Heizvorrichtung strömenden Luft erfasst, und einer Steuerschaltung zur Freigabe oder Sperrung der Stromzufuhr zu den PTC-Heizelementen (210), wobei die Steuerschaltung umfasst:
eine Speichereinrichtung zur Speicherung eines vorbestimmten Temperaturschwellwertes (ϑ_{V}),
einen Komparator zum Vergleich der von dem Temperatursensor (170) erfassten Temperatur (ϑ_{In}) mit dem gespeicherten Temperaturwertschwellwert (ϑ_{V0}) und
eine Aktivierungseinrichtung zur Freigabe oder Unterbrechung der Stromzufuhr zu den PTC-Heizelementen (210) in Abhängigkeit von dem Vergleichsergebnis des Komparators
**dadurch gekennzeichnet, dass**
die Steuerschaltung mit der elektrischen Heizvorrichtung in einem Gehäuse (120) integriert ist und
der Temperatursensor (170) an dem Gehäuse angebracht ist.

**2.** Elektrische Heizvorrichtung nach Anspruch 1, wobei die Aktivierungseinrichtung die Stromzufuhr freigibt, wenn die erfasste Temperatur (ϑ_{In}) unter dem Temperaturwertschwellwert (ϑ_{V}) liegt.

**3.** Elektrische Heizvorrichtung nach Anspruch 1 oder 2, wobei der Temperaturschwellwert (ϑ_{V}) im Bereich zwischen 5°C und 15°C , vorzugsweise zwischen 8°C und 10°C liegt.

**4.** Steuerschaltung nach einem der Ansprüche 1 bis 3 mit einer Detektionseinrichtung zur Erfassung eines Starts und/oder einer Abschaltung des Motors des Kraftfahrzeugs.

**5.** Elektrische Heizvorrichtung nach einem der Ansprüche 1 bis 4 mit einer Zeiterfassungseinrichtung zur Erfassung der Zeitdauer (Tₐᵤₛ), die seit der Abschaltung des Motors verstrichen ist.

**6.** Elektrische Heizvorrichtung nach Anspruch 5, wobei
die Speichereinrichtung eine vorbestimmte Zeitdauer (T_{Min}) speichert,
die Steuerschaltung einen Komparator umfasst, der eine Zeitdauer (Taus), die seit der Abschaltung des Motors verstrichen ist, mit der vorbestimmten Zeitdauer (T_{Min}) vergleicht und
die Aktivierungseinrichtung die Zufuhr von Strom zu den PTC-Heizelementen (210) sperrt, wenn die erfasste Zeitdauer (Taus) die vorbestimmte Zeitdauer (Tₘᵢₙ) unterschreitet.

**7.** Elektrische Heizvorrichtung nach Anspruch 6, wobei die gespeicherte Zeitdauer (T_{Min}) im Bereich von 1 bis 5 Stunden, vorzugsweise zwischen 2 und 3 Stunden liegt.

**8.** Elektrische Heizvorrichtung nach einem der Ansprüche 1 bis 5 mit einer Modifikationseinrichtung zur Bewertung des gespeicherten Temperaturschwellwertes (ϑ_{V0}) vor dem Vergleich mit der erfassten Temperatur (ϑ_{In}).

**9.** Elektrische Heizvorrichtung nach Anspruch 8, wobei die Modifikationseinrichtung den gespeicherten Temperaturschwellwert (ϑ_{V0}) in Abhängigkeit von der seit dem Abschalten des Motors verstrichenen Zeitdauer (Tₐᵤₛ) anhebt, und zwar so, dass sich der angehobene Temperaturschwellwert (ϑ_{V}) mit zunehmender Zeitdauer (Tₐᵤₛ) dem gespeicherten Temperaturschwellwert (ϑ_{V0}) annähert.

**10.** Elektrische Heizvorrichtung nach Anspruch 8 oder 9, wobei die Modifikationseinrichtung den gespeicherten Temperaturschwellwert (ϑ_{V0}) so abändert, dass der gespeicherte Temperaturschwellwert (ϑ_{V0}) zunächst auf einen erhöhten Temperaturschwellwert (ϑ_{V1}) angehoben und mit zunehmender Zeitdauer (Tₐᵤₛ) auf den gespeicherten Temperaturschwellwert (ϑ_{V0}) abgesenkt wird.

**11.** Elektrische Heizvorrichtung nach Anspruch 10, wobei die Modifikationseinrichtung den gespeicherten Temperaturschwellwert (ϑ_{V0}) in einem Zeitintervall zwischen einem ersten vorgegebenen Zeitpunkt (T_{Min1}) nach dem Abschalten des Motors bis zu einem zweiten vorgegebenen Zeitpunkt (T_{Min2}) nach dem Abschalten des Motors von einem vorgegebenen erhöhten Temperaturschwellwert (ϑ_{V1}) auf den gespeicherten Temperaturschwellwert (ϑ_{V0}) absenkt.

**12.** Elektrische Heizvorrichtung nach einem der Ansprüche 6 bis 11, wobei die Aktivierungseinrichtung die Stromzufuhr zu den PTC-Heizelementen (210) zwischen dem Abschalten des Motors und einem ersten vorgegebenen Zeitpunkt (T_{Min1}) nach dem Abschalten des Motors unterbricht.

**13.** Elektrische Heizvorrichtung nach einem der Ansprüche 1 bis 12 mit einer Leistungsregelungseinrichtung zur Einstellung der den PTC-Heizelementen (210) zugeführten Strommenge.

**14.** Elektrische Heizvorrichtung nach Anspruch 13, wobei die Leistungsregelungseinrichtung die Strommenge in Abhängigkeit von der im Bordnetz des Kraftfahrzeugs verfügbaren Strommenge einstellt.

**15.** Elektrische Heizvorrichtung nach Anspruch 14, wobei die Leistungsregelungseinrichtung die dem Bordnetz entnommene Strommenge in Abhängigkeit von der erfassten Höhe der Bordnetzspannung einstellt.

**16.** Elektrische Heizvorrichtung nach Anspruch 15, wobei die Leistungsregelungseinrichtung die dem Bordnetz entnommene Strommenge so einstellt, dass ein vorgegebener Wert der Bordnetzspannung nicht unterschritten wird.

**17.** Elektrische Heizvorrichtung nach Anspruch 16, wobei der vorgegebene Wert der Bordnetzspannung in Abhängigkeit von der erfassten Temperatur (ϑ_{In}) der Zuluft variiert, insbesondere bei tieferen Temperaturen angehoben wird.

**18.** Elektrische Heizvorrichtung nach Anspruch 14, wobei die Leistungsregelungseinrichtung mit einer externen Signalleitung verbindbar ist, die die im Bordnetz verfügbare Strommenge anzeigt.

**19.** Elektrische Heizvorrichtung nach Anspruch 18, wobei die externe Signalleitung das DF-Signal (180) eines Generators des Kraftfahrzeugs ist.

**20.** Elektrische Heizvorrichtung nach einem der Ansprüche 13 bis 19, wobei die Leistungsregelungseinrichtung die den PTC-Heizelementen (210) zugeführte Strommenge in Abhängigkeit von der erfassten Temperatur (ϑ_{In}) einstellt.

**21.** Elektrische Heizvorrichtung nach Anspruch 20, wobei die Leistungsregelungseinrichtung während der Freigabe der Stromzufuhr zu den PTC-Heizelementen (210) bei einer erfassten Temperatur (ϑ_{In}), die kleiner als eine erste vorgegebene Temperatur (ϑ_{In1}) ist, den PTC-Heizelementen (210) eine maximal verfügbare Strommenge zuführt.

**22.** Elektrische Heizvorrichtung nach Anspruch 21, wobei die Leistungsregelungseinrichtung die Stromzufuhr zu den PTC-Heizelementen (210) unterbricht, sobald die erfasste Temperatur (ϑ_{In}) eine zweite vorgegebene Temperatur (ϑ_{In2}) erreicht.

**23.** Elektrische Heizvorrichtung nach Anspruch 21 oder 22, wobei die Leistungsregelungseinrichtung die den PTC-Heizelementen (210) zugeführte Strommenge in dem Temperaturintervall zwischen der ersten vorgegebenen Temperatur (ϑ_{In1}) und der zweiten vorgegebenen Temperatur (ϑ_{In2}) von einer maximal möglichen Heizleistung (Pₘₐₓ) auf Null reduziert.

**24.** Elektrische Heizvorrichtung nach einem der Ansprüche 21 bis 23, wobei die erste vorgegebene Temperatur (ϑ_{In1}) in einem Bereich von 10°C bis 25°C, vorzugsweise zwischen 18°C und 22°C liegt.

**25.** Elektrische Heizvorrichtung nach einem der Ansprüche 21 bis 24, wobei die zweite vorgegebene Temperatur (ϑ_{In2}) in einem Bereich von 50°C bis 90°C, vorzugsweise zwischen 75°C und 85°C liegt.

**26.** Verfahren zum Betreiben einer elektrischen Heizvorrichtung, insbesondere als Zusatzheizung für ein Kraftfahrzeug, wobei die Heizvorrichtung PTC-Heizelemente (210), eine Steuerschaltung und einen Temperatursensor (170) umfasst, der die Temperatur (ϑ_{In}) der in die Heizvorrichtung strömenden Luft erfasst und der an einem Gehäuse (120) angebracht ist, in dem die Steuervorrichtung mit der elektrische Heizvorrichtung integriert ist, mit den Schritten:
Erfassen der Temperatur der in die Heizvorrichtung strömenden Luft durch den Temperatursensor (170),
Vergleichen der von dem Temperatursensor (170) erfassten Temperatur (ϑ_{In}) mit dem gespeicherten Temperaturwertschwellwert (ϑ_{V}) und
Freigeben oder Sperren der Stromzufuhr zu den PTC-Heizelementen (210) in Abhängigkeit von dem Vergleichsergebnis.

**27.** Verfahren nach Anspruch 26, wobei die Stromzufuhr freigegeben wird, wenn die erfasste Temperatur (ϑ_{In}) unter dem Temperaturwertschwellwert (ϑ_{V}) liegt.

**28.** Verfahren nach Anspruch 26 oder 27, wobei der Temperaturschwellwert (ϑ_{V}) im Bereich zwischen 5°C und 15°C , vorzugsweise zwischen 8°C und 10°C liegt.

**29.** Verfahren nach einem der Ansprüche 26 bis 28, mit den zusätzlichen Schritten:
Erfassen einer Zeitdauer (Tₐᵤₛ), die seit der Abschaltung des Motors verstrichen ist,
Vergleichen der Zeitdauer (Tₐᵤₛ), die seit der Abschaltung des Motors verstrichen ist, mit einer vorbestimmten Zeitdauer (T_{Min}) und
Sperren der Zufuhr von Strom zu den PTC-Heizelementen (210), wenn die erfasste Zeitdauer (Tₐᵤₛ) die vorbestimmte Zeitdauer (T_{Min}) unterschreitet.

**30.** Verfahren nach Anspruch 29, wobei die gespeicherte Zeitdauer (T_{Min}) im Bereich von 1 bis 5 Stunden, vorzugsweise zwischen 2 und 3 Stunden liegt.

**31.** Verfahren nach einem der Ansprüche 26 bis 28 mit dem weiteren Schritt der Bewertung des gespeicherten Temperaturschwellwertes (ϑ_{V0}) vor dem Vergleich mit der erfassten Temperatur (ϑ_{In}).

**32.** Verfahren nach Anspruch 31, wobei der gespeicherte Temperaturschwellwert (ϑ_{V0}) in Abhängigkeit von der seit dem Abschalten des Motors verstrichenen Zeitdauer (Tₐᵤₛ) angehoben wird, und zwar so, dass sich der angehobene Temperaturschwellwert (ϑ_{V}) mit zunehmender Zeitdauer (Tₐᵤₛ) dem gespeicherten Temperaturschwellwert (ϑ_{V0}) annähert.

**33.** Verfahren nach Anspruch 31 oder 32, wobei der gespeicherte Temperaturschwellwert (ϑ_{V0}) so abgeändert wird, dass der gespeicherte Temperaturschwellwert (ϑ_{V0}) zunächst auf einen erhöhten Temperaturschwellwert (ϑ_{V1}) angehoben und mit zunehmender Zeitdauer (Tₐᵤₛ) auf den gespeicherten Temperaturschwellwert (ϑ_{V0}) abgesenkt wird.

**34.** Verfahren nach Anspruch 31, wobei der gespeicherte Temperaturschwellwert (ϑ_{V0}) in einem Zeitintervall zwischen einem ersten vorgegebenen Zeitpunkt (T_{Min1}) nach dem Abschalten des Motors bis zu einem zweiten vorgegebenen Zeitpunkt (T_{Min2}) nach dem Abschalten des Motors von einem vorgegebenen erhöhten Temperaturschwellwert (ϑ_{V1}) auf den gespeicherten Temperaturschwellwert (ϑ_{V0}) abgesenkt wird.

**35.** Verfahren nach einem der Ansprüche 26 bis 34, wobei die Stromzufuhr zu den PTC-Heizelementen (210) zwischen dem Abschalten des Motors und einem ersten vorgegebenen Zeitpunkt (T_{Min1}) nach dem Abschalten des Motors unterbrochen wird.

**36.** Verfahren nach einem der Ansprüche 26 bis 35, wobei die Heizleistung in Abhängigkeit von der im Bordnetz des Kraftfahrzeugs verfügbaren Leistung eingestellt wird.

**37.** Verfahren nach Anspruch 36, wobei die Heizleistung in Abhängigkeit von der erfassten Höhe der Bordnetzspannung eingestellt wird.

**38.** Verfahren nach Anspruch 37, wobei die dem Bordnetz entnommene Strommenge so eingestellt wird, dass ein vorgegebener Wert der Bordnetzspannung nicht unterschritten wird.

**39.** Verfahren nach Anspruch 38, wobei der vorgegebene Wert der Bordnetzspannung in Abhängigkeit von der erfassten Temperatur (ϑ_{In}) der Zuluft variiert wird, insbesondere bei tieferen Temperaturen angehoben wird.

**40.** Verfahren nach Anspruch 36, wobei die Heizleistung in Abhängigkeit von dem DF-Signal des Kraftfahrzeuggenerators eingestellt wird.

**41.** Verfahren nach einem der Ansprüche 26 bis 40, wobei die Heizleistung der PTC-Heizelemente (210) in Abhängigkeit von der erfassten Temperatur (ϑ_{In}) eingestellt wird.

**42.** Verfahren nach Anspruch 41, wobei die Heizleistung der PTC-Heizelemente (210) auf eine maximale Heizleistung bei Freigabe der Stromzufuhr zu den PTC-Heizelementen (210) bei einer erfassten Temperatur (ϑ_{In}), die kleiner als eine erste vorgegebene Temperatur (ϑ_{In1}) ist, eingestellt wird.

**43.** Verfahren nach Anspruch 42, wobei Heizleistung der PTC-Heizelemente (210) auf Null eingestellt wird, sobald die erfasste Temperatur (ϑ_{In}) eine zweite vorgegebene Temperatur (ϑ_{In2}) erreicht.

**44.** Verfahren nach Anspruch 42 oder 43, wobei die Heizleistung der PTC-Heizelemente (210) in dem Temperaturintervall zwischen der ersten vorgegebenen Temperatur (ϑ_{In1}) und der zweiten vorgegebenen Temperatur (ϑ_{In2}) von einer maximal möglichen Heizleistung (Pₘₐₓ) auf Null reduziert wird.

**45.** Verfahren nach einem der Ansprüche 42 bis 44, wobei die erste vorgegebene Temperatur (ϑ_{In1}) in einem Bereich von 10°C bis 25°C, vorzugsweise zwischen 18°C und 22°C liegt.
